# FASCICULE DE BREVET EUROPEEN

(11) **EP 3 627 389 B1**
(45) Date de publication et mention de la délivrance du brevet: **21.02.2024**
(21) Numéro de dépôt: 19197538.2
(22) Date de dépôt: 16.09.2019
(51) Int. Cl.: G06V 10/82, G06V 20/52, G06V 30/19, G06V 30/194, G06V 10/94

(54) **PROCÉDÉ ET SYSTÈME D'ANALYSE AUTOMATIQUE DE FLUX VIDÉO CAPTÉS PAR UNE PLURALITÉ DE CAMÉRAS DE VIDÉOSURVEILLANCE**
AUTOMATISCHES ANALYSEVERFAHREN UND -SYSTEM VON VIDEODATENFLÜSSEN, DIE DURCH EINE VIELZAHL VON VIDEOÜBERWACHUNGSKAMERAS ERFASST WERDEN
METHOD AND SYSTEM FOR AUTOMATIC ANALYSIS OF VIDEO STREAMS CAPTURED BY A PLURALITY OF SURVEILLANCE SYSTEM CAMERAS

(30) Priorité: 18.09.2018 FR 1800985
(43) Date de publication de la demande: 25.03.2020
(73) Titulaire: Thales, 92400 Courbevoie (FR)
(72) Inventeur: MARTIN DECROIX, Dominique, 78141 VELIZY CEDEX (FR); STOIAN, Andrei, 91767 PALAISEAU CEDEX (FR); JOUDRIER, Stéphanie, 78141 VELIZY CEDEX (FR); LAMARQUE, Thierry, 91767 PALAISEAU CEDEX (FR)
(74) Mandataire: Lavoix

(56) Documents cités:
- ZHIHE ZHAO ET AL: "Demo Abstract: ECRT: An Edge Computing System for Real-Time Image-based Object tracking", EMBEDDED NETWORKED SENSOR SYSTEMS, ACM, 2 PENN PLAZA, SUITE 701NEW YORKNY10121-0701USA, 26 août 2018 (2018-08-26), pages 394-395, XP058418844, DOI: 10.1145/3274783.3275199 ISBN: 978-1-4503-5952-8
- LI ET AL: "Edge Intelligence : On-Demand Deep Learning Model Co-Inference with Device-Edge Synergy", PROCEEDINGS OF THE 2018 WORKSHOP ON MOBILE EDGE COMMUNICATIONS , MECOMM'18, 14 septembre 2018 (2018-09-14), pages 31-36, XP055599740, New York, New York, USA DOI: 10.1145/3229556.3229562 ISBN: 978-1-4503-5906-1
- LI HE ET AL: "Learning IoT in Edge: Deep Learning for the Internet of Things with Edge Computing", IEEE NETWORK, IEEE SERVICE CENTER, NEW YORK, NY, US, vol. 32, no. 1, 1 janvier 2018 (2018-01-01), pages 96-101, XP011676330, ISSN: 0890-8044, DOI: 10.1109/MNET.2018.1700202 [extrait le 2018-01-25]

## Description

La présente invention concerne un procédé et un système d'analyse automatique de flux vidéo captés par une pluralité de caméras de vidéosurveillance.

L'invention s'applique dans le domaine de la vidéosurveillance en général, en particulier la vidéosurveillance à grande échelle, par exemple d'un réseau ferroviaire de trains ou de métros, d'aéroports ou autres infrastructures de ce type. De manière plus générale, l'invention s'applique dans les systèmes de vidéosurveillance distribués pour des systèmes industriels de grande capacité.

Dans de tels contextes d'application, un grand nombre de caméras sont installées sur le site, ainsi qu'embarquées au bord du matériel roulant lorsqu'il s'agit de la surveillance d'une infrastructure de type réseau de transport. Le nombre de caméras peut dépasser plusieurs milliers dans certaines infrastructures. Les caméras de vidéosurveillance (ou caméras CCTV en anglais) sont classiquement connectées à un ou plusieurs serveurs ou centres de calcul, via un réseau de télécommunications. Les flux vidéos ainsi générés par les caméras de vidéosurveillance sont très importantes et la quantité de données à transmettre surpasse rapidement la bande passante disponible sur les réseaux de télécommunication si les flux vidéos devaient tous être visualisés ou traités à un niveau centralisé.

Par ailleurs, le traitement d'analyse des flux de données vidéo nécessite une capacité calculatoire très importante, pour effectuer une application d'analyse selon les besoins des applications clientes en un temps suffisamment rapide pour répondre à un cahier de charges.

Par conséquent, le domaine de l'analyse des flux de vidéosurveillance, pour des infrastructures étendues, présente de nombreux défis techniques.

Il existe des solutions à base de traitement d'analyse des flux vidéo captés centralisé sur des serveurs distants, qui sont néanmoins limitées en pratique par la bande passante disponible et les capacités de calcul.

Il existe également des applications intégrées dans les caméras de vidéosurveillance, implémentées de manière optimale dans les ressources matérielles de telles caméras. Néanmoins, de telles applications sont intégrées lors de la fabrication, et ne sont pas évolutives dans le temps. En pratique, une mise à jour des applications nécessite un changement de la totalité des caméras de vidéosurveillance, ce qui est particulièrement coûteux. De plus, le traitement intégré dans chaque caméra ne permet pas de titrer profit d'informations multi-capteurs pour réaliser une analyse de situation.

A l'heure actuelle, les algorithmes les plus performants pour réaliser des fonctionnalités de traitement d'images sont les algorithmes basés sur des réseaux de neurones à apprentissage profond (en anglais « deep-learning neural networks »). Ces réseaux de neurones comportent une pluralité de couches, et présentent un maillage très dense. De tels réseaux de neurones sont capables d'analyser finement de très grands volumes de données, mais nécessitent une puissance calculatoire importante.

Les articles suivants décrivent des méthodes utilisant des réseaux de neurones à apprentissage profond : « Demo Abstract : ECRT : An Edge Computing System for RealTime Image-Based Object Tracking » de Zhihe Zhao et al, publié dans Embedded Networked Sensor Systems, ACM, 2018; « Edge Intelligence : On-Demand Deep Learning Model Co-Inference with Device-Edge Synergy » de Li et al, publié dans Proceedings of the 2018 Workshop on Mobile Edge Communications, MECOMM'18 ; « Learning IoT in Edge : Deep Learning for the Internet of Things with Edge Computing » publiée dans IEEE Network, vol. 32, n°1, janvier 2018.

Il est souhaitable de mettre au point des procédés de vidéosurveillance permettant de traiter de très grands volumes de données, de manière automatique et en un temps satisfaisant pour de nombreuses applications utiles pour des clients, tout en restant compatible avec des ressources matérielles de communication et de calcul et permettant une évolutivité dans le temps.

A cet effet, l'invention propose un procédé d'analyse automatique de flux vidéo captés par une pluralité de caméras de vidéosurveillance selon la revendication 1.

Avantageusement, l'invention permet de distribuer le traitement d'analyse des flux vidéos d'une part sur chaque caméra de vidéosurveillance, pour extraire des premières métadonnées comportant des descripteurs caractéristiques d'objets appartenant aux images traitées, et d'autre part, sur des serveurs distants pour extraire des deuxièmes métadonnées et mettre en oeuvre diverses analyses de situation des scènes vidéo captées.

Avantageusement, la bande passante nécessaire pour transmettre des informations caractérisant les flux vidéo captés est fortement réduite par rapport à la bande passante nécessaire pour transmettre des flux vidéo captés.

Avantageusement, les premières métadonnées sélectionnées sont génériques et permettent la mise en oeuvre de plusieurs algorithmes d'analyse de situation.

De plus, avantageusement, la deuxième partie de traitement mise en oeuvre par le système informatique distant est évolutive, par exemple le code informatique peut être optimisé ou de nouveaux algorithmes d'analyse de situation pour de nouvelles fonctionnalités peuvent être ajoutés, sans nécessiter de modification de matériel et par conséquent, sans surcoût matériel.

Le procédé d'analyse automatique de flux vidéo selon l'invention peut également présenter une ou plusieurs des caractéristiques des revendications dépendantes, prises indépendamment ou selon toutes les combinaisons techniquement envisageables.

Selon un autre aspect, l'invention concerne un système d'analyse automatique de flux vidéo captés par une pluralité de caméras de vidéosurveillance selon la revendication 7.

Dans un mode de réalisation, le système informatique distant comporte pluralité de serveurs distants connectés via un réseau de communications, ladite pluralité de serveurs fournissant une capacité calculatoire extensible.

Selon un autre aspect, l'invention concerne également un programme d'ordinateur comportant des instructions logicielles qui, lorsqu'elles sont exécutées par un dispositif électronique programmable, mettent en oeuvre un procédé d'analyse automatique de flux vidéo telle que brièvement décrite ci-dessus.

D'autres caractéristiques et avantages de l'invention ressortiront de la description qui en est donnée ci-dessous, à titre indicatif et nullement limitatif, en référence aux figures annexées, parmi lesquelles :
- la figure 1 est une représentation schématique d'un système d'analyse automatique de flux vidéo selon un mode de réalisation de l'invention ;
- la figure 2 est une représentation schématique d'un système d'analyse automatique de flux vidéo mettant en oeuvre un découpage de réseau de neurones ;
- la figure 3 illustre schématiquement un exemple de premier et deuxième traitements d'analyse selon un mode de réalisation.

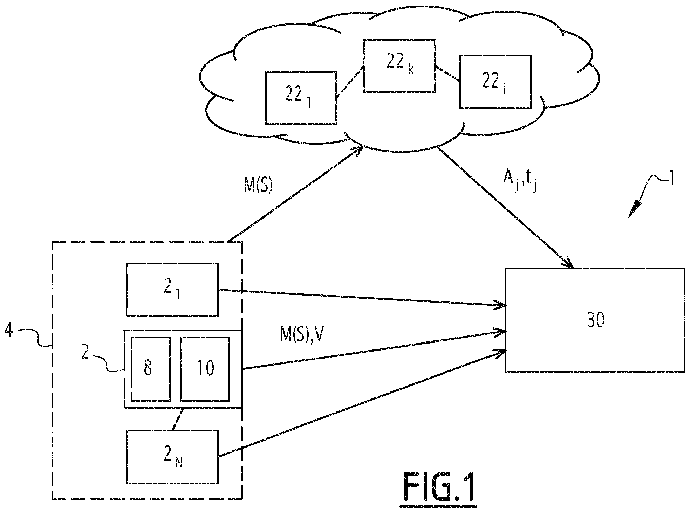

La figure 1 illustre schématiquement un système 1 d'analyse automatique de flux vidéo selon un mode de réalisation.

Le système 1 dans cet exemple comprend une pluralité de caméras 2, à 2_{N} de vidéosurveillance, positionnées sur un site 4 à surveiller. Dans un cas d'application, le site 4 est une infrastructure ferroviaire, comprenant des véhicules ferroviaires (trains, métros) mobile, ainsi qu'une partie fixe comprenant un ensemble de stations comprenant chacune une pluralité de quais et des accès pour les personnes (hall d'accès, portiques, couloirs). Les caméras de vidéosurveillance sont positionnées sur le site, et elles peuvent être embarquées à bord des véhicules ferroviaires et/ou positionnées dans la partie fixe de l'infrastructure.

Chaque caméra de vidéosurveillance, ou caméra CCTV (de l'anglais « closedcircuit télévision »), est adaptée à capter des flux vidéo avec une résolution associée. Par exemple, dans un mode de réalisation, chaque caméra est adaptée à acquérir des images numériques de résolution 1080x720 pixels.

Par la suite, le détail de la description portera sur une seule caméra de vidéosurveillance 2, étant entendu que les autres caméras de vidéosurveillance déployées sur le site 4 ont un fonctionnement analogue.

En plus des capteurs d'image (non représentés) la caméra 2 comporte au moins un processeur de calcul 8 adapté pour la mise en oeuvre des traitements d'analyse d'images et un module de communication 10, permettant la connexion à un réseau de communication, de manière à permettre la transmission de données à des systèmes informatiques distants. Par exemple, le module de communication 10 est adapté à la mise en oeuvre un protocole de communication IP.

Le système 1 comporte en outre un système informatique distant 20, comportant une pluralité de serveurs 22₁,..., 22ᵢ; de calcul, chaque serveur comportant au moins un processeur de calcul, connectés entre eux et fournissant une capacité de calcul extensible grâce à la répartition des calculs sur la pluralité de serveurs. Un tel système informatique 20 est également appelé « cloud » en anglais.

Le système 1 comprend également, dans le mode de réalisation illustré, un centre de contrôle 30, par exemple installé chez un opérateur de l'infrastructure à surveiller.

Chaque caméra de vidéosurveillance est connectée au centre de contrôle 30 et adaptée à transmettre des données à ce centre de contrôle 30.

En particulier, une caméra de vidéosurveillance 2 est adaptée à mettre en oeuvre une première partie de traitement d'analyse de flux vidéo, comme expliqué plus en détail ci-après, ladite première partie de traitement d'analyse comportant une extraction de premières métadonnées M(S) comportant des descripteurs caractéristiques d'objets appartenant aux images traitées.

Le terme « objet » s'entend ici au sens large et englobe les objets inanimés, ainsi que les personnes visibles sur les images acquises par les caméras de vidéosurveillance.

La caméra 2 est adaptée à transmettre ces métadonnées M(S) au système informatique distant 20 et au centre de contrôle 30.

De plus, la caméra de vidéosurveillance 2 est adaptée à transmettre au centre de contrôle 30 au moins une partie des flux vidéo V acquis la caméra de vidéosurveillance 2.

Le système informatique distant 20 met en oeuvre une deuxième partie de traitement d'analyse de flux vidéo, comportant une extraction de deuxièmes métadonnées M(Q) caractéristiques des objets appartenant aux images traitées et une factorisation des deuxièmes métadonnées obtenues de plusieurs caméras de vidéosurveillance pour effectuer au moins une analyse de situation associée aux flux vidéo captés.

On entend ici par factorisation un traitement conjoint de descripteurs caractéristiques d'objets appartenant aux images traitées issus d'au moins deux caméras de vidéosurveillance distinctes.

L'analyse de situation permet par exemple :
- une détection de présence de personnes ou d'objets, par exemple de bagages abandonnés dans le cas d'un réseau ferroviaire ;
- une détection d'intrusion, par exemple sur les rails ou dans un véhicule garé,
- une reconnaissance de visage,
- une détection d'évènement ou d'incident, par exemple une chute ou une agression de personne, ou
- une estimation de densité de foule, ou un comptage de personnes, sur un quai ou dans une voiture d'un véhicule ferroviaire.

Bien entendu, la liste donnée ici n'est pas limitative ni exhaustive.

Le système informatique 20 est adapté à transmettre un résultat d'analyse de situation Aj au centre de contrôle 30, ainsi qu'une étiquette temporelle tⱼ associée, indiquant un instant temporel ou une fenêtre temporelle associée au résultat d'analyse.

Par exemple, si l'analyse de situation effectue une détection d'évènement tel une chute de personne, le résultat d'analyse de situation est une levée d'alerte, avec une localisation spatiale d'alerte associée. L'étiquette temporelle associée permet au centre de contrôle de récupérer plus particulièrement une partie des flux vidéo transmis par une ou plusieurs caméras positionnées autour de la localisation spatiale d'alerte, en fonction de l'étiquette temporelle tⱼ, permettant une prise en charge adéquate d'un tel incident.

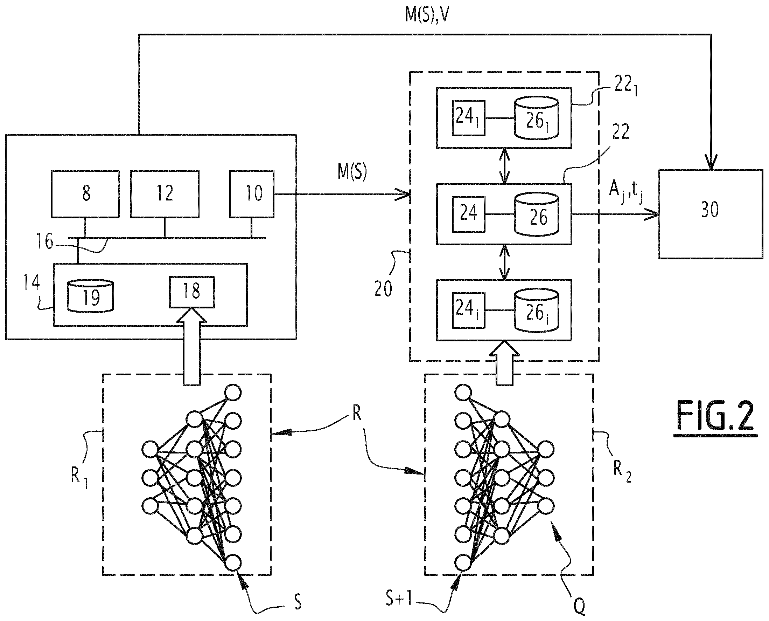

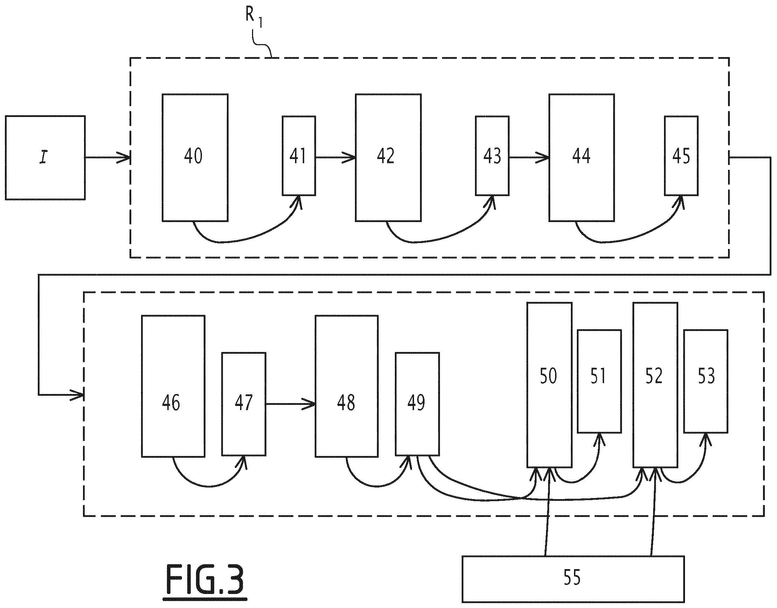

Dans un mode de réalisation avantageux, comme illustré schématiquement dans les figures 2 et 3, l'extraction des premières métadonnées d'une part et l'extraction des deuxièmes métadonnées d'autre part est effectuée par mise en oeuvre d'un découpage d'un réseau de neurones profond R, ce réseau de neurones étant découpé en deux sous-réseaux de neurones, un premier sous-réseau R₁ étant implémenté par chaque caméra de vidéosurveillance et un deuxième sous-réseau R₂ étant implémenté par les processeurs du système informatique 20. Chaque sous-réseau de neurones est également un réseau de neurones.

Un réseau de neurones profond (en anglais « deep neural network ») est, de manière connue, une méthode d'apprentissage automatique à partir de données numériques représentatives de grandeurs physiques permettant d'obtenir des descripteurs de ces données. Par exemple les données traitées sont des données d'image numérique, et le réseau de neurones met en oeuvre des filtrages, en particulier des convolutions, sur plusieurs niveaux de profondeur hiérarchisés, permettant d'obtenir à chaque niveau de profondeur des caractéristiques descriptives de niveaux sémantiques différents. Dans une phase d'apprentissage, un réseau de neurones à apprentissage supervisé utilise de connaissances issues d'une base de données de connaissances.

A chaque niveau de profondeur, un ensemble de descripteurs, appelés ici métadonnées, est obtenu.

Par exemple, lorsque le réseau de neurones met en oeuvre un traitement d'images numériques, les calculs effectués permettent d'obtenir pour une image numérique I, à un premier niveau de profondeur des contours détectés dans l'image, à un deuxième niveau de profondeur des parties d'objets, à un troisième niveau de profondeur, une classification d'objets par rapport à des catégories d'objets prédéterminées, par exemple visages, voitures ou tout autre objet.

De préférence, un réseau de neurones profond convolutif (en anglais, CNN pour « Convolutional neural network ») est utilisé. Plusieurs algorithmes mettant en oeuvre de tels réseau de neurones dans le domaine de l'analyse d'images numériques sont connus, par exemple le réseau VGG décrit dans l'article « Very Deep Convolutional Networks for Large Scale Image Recognition », de Simonyan et Zisserman, International Conférence on Learning Representations (ICLR) 2015, ou « Deep residual learning for image recognition » de He et al, publié dans IEEE Conférence on Computer Vision and Pattern Analysis 2016, pages 770-778.

Par exemple, un réseau de neurones R à Q niveaux de profondeur, référencés 1,..,S,...,Q sur la figure 2, est choisi pour effectuer une analyse d'images permettant d'obtenir des descripteurs utilisables pour diverses analyses de situation. Le réseau de neurones R est formé par l'union de deux sous-réseaux : R=(R₁UR₂).

Dans l'illustration schématique de la figure 2, le premier sous-réseau de neurones R₁ comporte S=3 niveaux de profondeur, et est mis en oeuvre par la caméra 2. Plus généralement, le premier sous-réseau de neurones R₁ met en oeuvre les S premiers niveaux de profondeur du réseau de neurones R choisi, S étant désigné comme étant le niveau de profondeur de découpage, S étant bien entendu inférieur au nombre Q de niveaux de profondeur du réseau de neurones R.

Le deuxième sous-réseau de neurones R₂ met en oeuvre les autres niveaux de profondeur du réseau de neurones R, allant de S+1 à Q.

Dans un mode de réalisation, la caméra 2 comporte un processeur de calcul 8 de type CPU et, optionnellement, un dispositif accélérateur de calculs 12 par exemple un processeur GPU (« Graphics Processing Unit »), TPU (« tensor procesing unit »), DSP (« digital signal processor ») ou FPGA (« Field Programmable Gate Array »).

Selon une variante, la caméra 2 comporte seulement un processeur CPU 8 ou un dispositif accélérateur de calculs 12.

La caméra 2 comporte aussi une unité de mémoire 14, les dispositifs de calcul 8, 12 et l'unité de mémoire étant connectés via un bus de communication 16.

Ces éléments d'une caméra de vidéosurveillance forment un dispositif électronique programmable adapté à mettre en oeuvre des calculs.

Dans un mode de réalisation, des instructions de code logiciel 18 permettant de mettre en oeuvre les S niveaux de profondeur du réseau de neurones R, formant le premier sous-réseau de neurones R₁, sont mémorisées dans l'unité de mémoire 16. L'unité de mémoire 14 est également adaptée, dans un mode de réalisation, à mémoriser une base de données 19, comportant par exemple des données de classification d'objets.

De premières métadonnées M(S) sont transmises au système informatique 20 multi-processeurs, qui met en oeuvre le deuxième sous-réseau de neurones R₂.

Chaque serveur de calcul 22 comporte au moins un processeur de calcul 24 et au moins une unité de mémoire 26 associée.

Par exemple, comme illustré schématiquement à la figure 3, une image numérique I acquise par la caméra 2 est fournie en entrée du premier sous-réseau de neurones R₁, qui met en oeuvre trois niveaux d'opérations de filtrage, par exemple des convolutions 40, 42, 44, correspondant respectivement à la mise en oeuvre d'un premier niveau de profondeur du sous-réseau R₁, un deuxième niveau de profondeur du sous-réseau R₁ et un troisième niveau de profondeur du sous-réseau R₁. Le niveau de profondeur de découpage est S=3. En sortie de chaque bloc de convolutions 40, 42, 44 des métadonnées 41, 43, 45 sont obtenues.

Les modules 40, 42, 44 mettent en oeuvre une première partie de traitement d'analyse de flux vidéo, comportant une extraction de premières métadonnées 45.

Les premières métadonnées 45 au niveau de profondeur du découpage sont transmises au deuxième sous-réseau de neurones R₂.

L'étape de transmission de métadonnées est effectuée de manière classique, par tout protocole de transmission de données adapté.

Le deuxième sous-réseau R₂ met en oeuvre deux niveaux d'opérations de filtrage, par exemple des convolutions 46, 48. En sortie de chaque bloc de convolutions 46, 48 des métadonnées 47, 49 sont obtenues.

Les métadonnées 49 correspondant au cinquième niveau de profondeur dans l'exemple sont ensuite transmises pour utilisation à des modules de factorisation et d'analyse 50, 52, qui reçoivent des métadonnées 55 issues d'analyses d'images provenant de caméras de vidéosurveillance distinctes et permettent d'obtenir des résultats d'analyse 51, 53.

Par exemple, les métadonnées 55 sont des métadonnées de cinquième niveau de profondeur, obtenues de manière analogue à celle décrite ci-dessus à partir de données d'image acquises par une ou plusieurs autres caméras de vidéosurveillance.

Par conséquent, les modules 46, 48, 50 et 52 mettent en oeuvre une deuxième partie de traitement d'analyse de flux vidéo, comportant une extraction de deuxièmes métadonnées 49, 55 et une factorisation des deuxièmes métadonnées pour effectuer des tâches d'analyse de situation 50, 52.

Comme expliqué ci-dessus, les résultats d'analyse, avec étiquette temporelle associée, sont transmis au centre de contrôle 30 (non représenté à la figure 3), par un protocole de transmission de données adapté.

Avantageusement, une première partie de traitement d'analyse de flux vidéo est effectuée sur chacune des caméras de vidéosurveillance, cette première partie étant choisie pour tirer profit de la capacité de calcul du processeur 8 et/ou du processeur 12, tout en fournissant des premières métadonnées d'une généricité suffisante pour de nombreuses applications d'analyse effectuées dans la deuxième partie de traitement d'analyse de flux vidéo (modules 50, 52 dans l'exemple de la figure 3), mises en oeuvre par ledit système informatique distant.

Pour réaliser ce découpage, une détermination du niveau de profondeur de découpage S pour un réseau de neurones profond R est mise en oeuvre préalablement.

Une telle détermination de niveau de profondeur de découpage S est mise en oeuvre par un procédé automatique, mis en oeuvre sur un dispositif de calcul programmable, par exemple un ordinateur, comportant au moins un processeur de calcul de type CPU ou GPU.

Dans un mode de réalisation, pour effectuer une telle détermination de niveau de profondeur de découpage S d'un réseau de neurones R, des tâches à exécuter pour obtenir les fonctionnalités souhaitées, et les métadonnées nécessaire pour l'exécution de ces tâches, associées à des niveaux de de profondeur du réseau sont prises en considération.

La détermination d'un niveau de profondeur de découpage prend également en considération un critère de performance calculé pour chaque tâche à exécuter.

Pour une tâche à exécuter T, le critère de performance est par exemple une précision moyenne, une mesure de taux de précision par rapport à un taux de rappel, une mesure de gain non-cumulatif. Ces critères de performance sont bien connus dans le domaine de l'apprentissage statistique, en particulier dans le domaine des réseaux de neurones profonds.

Ce critère de performance est noté Perf[Rᵢ, Tⱼ] pour un réseau de neurones Rᵢ et une tâche Tⱼ.

De plus, un indicateur de généricité d'un réseau de neurones Rᵢ, est pris en considération, pour indiquer la capacité de ce réseau à être adapté à un ensemble de tâches T₁ à Tₙ. Par exemple, la généricité est mesurer comme étant la somme des performances :Σ(Perf[Rᵢ, Tₖ]) pour k allant de 1 à n.

Les capacités de calcul des ressources matérielles sont également prises en considération. Dans un système de vidéosurveillance 1 les capacités de calcul sont d'une part les capacités calculatoires du ou des processeurs intégrés 8, 12 dans la caméra de vidéosurveillance 2, et d'autre part, les capacités calculatoires du système informatique distant.

Par exemple, les capacités calculatoires sont représentées par le temps d'exécution, par exemple en secondes, de chaque tâche Tᵢ à effectuer par le réseau R.

De plus, la fréquence de traitement nécessaire pour chaque tâche à exécuter est prise en compte, une telle fréquence étant par exemple exprimée en Hz.

En effet, pour une effectuer une analyse d'intrusion il est suffisant de traiter une image par seconde, pour détecter un objet, par exemple un bagage abandonnée, il est suffisant de traiter une image toutes les 5 secondes et pour la détection d'un évènement, par exemple une chute de personnes, il est prévu d'utiliser 5 images par seconde.

Enfin, pour prendre en compte les contraintes de bande passante disponible, la taille des premières métadonnées à transmettre entre le premier sous-réseau de neurones et le deuxième sous-réseau de neurones est également prise en compte, pour obtenir une bande passante exprimée en bits par seconde ou en octets par seconde.

La détermination d'un niveau de découpage est effectuée par un procédé de calcul, qui maximise la généricité du deuxième sous-réseau R₂ sur un ensemble de tâches, maximise l'utilisation des capacités calculatoires de la caméra de vidéosurveillance et minimise la taille des premières métadonnées à transmettre.

Dans un premier exemple de réalisation non limitatif, la caméra embarque un processeur GPU de type TEGRA ^{®} TX2. Les tâches ou fonctionnalités à mettre en oeuvre sont le comptage de personnes, la détection de présence, la détection de chute et la détection de comportements agressifs. Le réseau de neurones R à découper effectue l'extraction de squelette et la mise en oeuvre de classifieurs statistiques pour chacune des tâches à effectuer. La caméra est adaptée à effectuer le traitement d'extraction de squelette à 5 images par seconde, et les métadonnées ont une taille de l'ordre de 500 KB/s.

Dans un deuxième exemple de réalisation non limitatif, la caméra comporte un processeur ARM ^{®} à 1,4 GHz, sans accélérateur de calcul. Les tâches ou fonctionnalités à mettre en oeuvre sont la détection d'objet, la détection de présence et d'intrusion. Par exemple, le réseau de neurones mis en oeuvre est un réseau SqueezeNet ^{®}, décrit dans « AlexNet-level accuracy with 50x fewer parameters and <0,5MB model size » de F. N. landola et al, publié sur Internet, arXiv technical report, 2016, ou le réseau MobileNetV2^{®}, décrit dans « MobileNetV2 : Inverted Residuals and Linear Bottlenecks », publié dans Proc. Of the IEEE Conférence on Computer Vision and Pattern Recognition, 2018, pages 4510-4520. Dans cet exemple, le découpage se fait au milieu du réseau, à la couche 5 parmi 10 couches, ce qui permet de maximiser la généricité et l'exploitation des ressources calculatoires de la caméra.

Avantageusement, dans un mode de réalisation, la première partie d'analyse met en oeuvre d'une part un sous-réseau de neurones pour effectuer une classification d'objets en catégories d'objets, et d'autre part un sous-réseau de neurones permettant la détection d'articulations ou la détection de squelette.

Dans un mode de réalisation, un algorithme d'extraction de squelette comprend une détection de points saillants d'image correspondant à des articulations est effectuée, chaque point correspondant à une articulation ayant une position spatiale associée, exprimée par des coordonnées (x,y) dans le référentiel de l'image numérique. Les articulations détectées ont chacune un type d'articulation associé, par exemple : les yeux, les oreilles, le cou, les épaules, les coudes, les poignets, les hanches, les genoux et les chevilles. Etant donné le type d'articulation détecté, les articulations sont liées pour former un squelette, représentatif d'une personne.

Par exemple, l'algorithme décrit dans « Realtime multi-person 2d pose estimation using part affinity fields » de Cao et al, Conférence on Computer Vision and Pattern Recognition 2017 est utilisé.

Les positions spatiales des articulations et leurs liens forment des descripteurs caractéristiques d'objets présents dans l'image numérique analysée.

Avantageusement, les descripteurs caractéristiques de squelette sont des descripteurs génériques permettant l'application d'une large gamme d'analyses de situation.

Avantageusement, l'invention permet à la fois de maximiser la généricité des descripteurs caractéristiques des images traitées pour un grand nombre d'analyses de situations, et l'utilisation des ressources calculatoires des caméras de vidéosurveillance.

## Revendications

1. Procédé d'analyse automatique de flux vidéo captés par une pluralité de caméras de vidéosurveillance, lesdites caméras ayant chacune au moins un processeur intégré adapté à effectuer des calculs et une capacité de connexion à un réseau de communication, ledit procédé comportant :
- une première partie de traitement d'analyse (40, 42, 44) de flux vidéo mettant en oeuvre un premier sous-réseau de neurones (R₁), effectuée par chaque caméra de vidéosurveillance (2₁, 2, 2_{N}) sur au moins une partie des images formant un flux vidéo capté par ladite caméra, mise en oeuvre par ledit au moins un processeur (8, 12) intégré de chaque caméra de vidéosurveillance, ladite première partie de traitement d'analyse comportant une extraction de premières métadonnées (M(S), 45), comportant des descripteurs caractéristiques des images traitées, par le premier sous-réseau de neurones,
- une transmission desdites premières métadonnées à au moins un système informatique distant (20) comportant une pluralité de processeurs de calcul,
- une deuxième partie de traitement d'analyse (46, 48, 50, 52) de flux vidéo mettant en oeuvre un deuxième sous-réseau de neurones (R₂), mise en oeuvre par ledit système informatique distant (20), comportant une extraction de deuxièmes métadonnées (49) caractéristiques des images traitées, utilisant lesdites premières métadonnées, et une factorisation des deuxièmes métadonnées, ladite factorisation consistant à appliquer un traitement conjoint de deuxièmes métadonnées obtenues pour des images traitées issues d'au moins deux caméras de vidéosurveillance distinctes, pour effectuer au moins une analyse de situation associée aux flux vidéo, et une transmission de résultat d'analyse de situation (A;) par le système informatique distant (20) à un centre de contrôle (30),
le procédé comportant en outre une étape préalable de détermination desdits premier sous-réseau de neurones (R₁) et deuxième sous-réseau de neurones (R₂) à partir d'un réseau de neurones profond (R) comportant une pluralité de niveaux (Q) de profondeur hiérarchisés, ladite détermination comportant le calcul d'un niveau de profondeur de découpage (S), le premier sous-réseau de neurones (R₁) mettant en oeuvre les niveaux de profondeur dudit réseau de neurones inférieurs audit niveau de profondeur de découpage, le deuxième sous-réseau de neurones (R₂) mettant en oeuvre les niveaux de profondeur dudit réseau de neurones supérieurs audit niveau de profondeur de découpage,
dans lequel, pour une pluralité de tâches à exécuter par ledit réseau de neurones profond (R), ledit calcul d'un niveau de profondeur de découpage est effectué, pour chaque caméra de vidéosurveillance, en fonction de capacités calculatoires dudit au moins un processeur intégré dans ladite caméra de vidéosurveillance, de capacités calculatoires dudit système informatique distant, et d'au moins un critère de performance calculé pour chaque tâche à exécuter,
la capacité calculatoire étant estimée par un temps d'exécution d'une tâche, le calcul d'un niveau de profondeur de découpage étant fonction en outre d'une fréquence de traitement associée à chaque tâche à exécuter.

2. Procédé selon la revendication 1, dans lequel le système informatique distant (20) comporte pluralité de serveurs distants connectés via un réseau de communications, ladite pluralité de serveurs fournissant une capacité calculatoire extensible.

3. Procédé selon la revendication 1 ou 2, dans lequel ledit au moins un critère de performance est choisi parmi une précision moyenne, une mesure de taux de précision par rapport à un taux de rappel, une mesure de gain non-cumulatif.

4. Procédé selon l'une des revendications 1 à 3, dans lequel la deuxième partie de traitement d'analyse met en oeuvre au moins une analyse de situation parmi : une détection d'intrusion, une reconnaissance de visage, une estimation de densité de foule, une détection d'évènement ou d'incident.

5. Procédé selon l'une des revendications 1 à 4, comportant en outre une transmission d'au moins une partie des flux vidéo (V) captés par chaque caméra de vidéosurveillance (2₁, 2, 2_{N}) audit centre de contrôle (30), et dans lequel la transmission de résultat d'analyse comporte un envoi d'alerte (A;) audit centre de contrôle (30) avec une étiquette temporelle associée (tⱼ).

6. Procédé selon l'une des revendications 1 à 5, dans lequel ledit réseau de neurones profond (R) est un réseau de neurones convolutif.

7. Système d'analyse automatique (1) de flux vidéo captés par une pluralité de caméras de vidéosurveillance, comportant lesdites caméras de vidéosurveillance (2₁, 2, 2_{N}) ayant chacune au moins un processeur intégré (8, 12) adapté à effectuer des calculs et une capacité de connexion (10) à un réseau de communication, et comportant un système informatique (20) distant et un centre de contrôle (30), ledit système d'analyse automatique (1) de flux vidéo étant tel que :
- pour chaque caméra de vidéosurveillance (2₁, 2, 2_{N}), ledit au moins un processeur intégré (8, 12) est adapté à effectuer une première partie de traitement d'analyse de flux vidéo mettant en oeuvre un premier sous-réseau de neurones (R₁), sur au moins une partie des images formant un flux vidéo capté par ladite caméra, ladite première partie de traitement d'analyse comportant une extraction de premières métadonnées (M(S)), comportant des descripteurs caractéristiques des images traitées, par la premier sous-réseau de neurones (R₁),
- chaque caméra (2₁, 2, 2_{N}) est adaptée à transmettre lesdites premières métadonnées (M(S)) audit au moins un système informatique distant (20) comportant une pluralité de processeurs de calcul (24₁,24, 24ᵢ),
- ledit système informatique distant (20) est adapté à mettre en oeuvre une deuxième partie de traitement d'analyse de flux vidéo mettant en oeuvre un deuxième sous-réseau de neurones (R₂) utilisant lesdites premières métadonnées, comportant une extraction de deuxièmes métadonnées caractéristiques des images traitées et une factorisation des deuxièmes métadonnées, ladite factorisation consistant à appliquer un traitement conjoint de deuxièmes métadonnées obtenues pour des images traitées issues d'au moins deux caméras de vidéosurveillance distinctes, pour effectuer au moins une analyse de situation associée aux flux vidéo, ledit système informatique (20) étant adapté à transmettre un résultat (Aⱼ) d'analyse de situation au centre de contrôle (30),
le système comportant en outre un dispositif de calcul programmable configuré pour mettre en oeuvre une détermination préalable desdits premier sous-réseau de neurones (R₁) et deuxième sous-réseau de neurones (R₂) à partir d'un réseau de neurones profond (R) comportant une pluralité de niveaux (Q) de profondeur hiérarchisés, ladite détermination comportant le calcul d'un niveau de profondeur de découpage (S), le premier sous-réseau de neurones (R₁) mettant en oeuvre les niveaux de profondeur dudit réseau de neurones inférieurs audit niveau de profondeur de découpage, le deuxième sous-réseau de neurones (R₂) mettant en oeuvre les niveaux de profondeur dudit réseau de neurones supérieurs audit niveau de profondeur de découpage,
dans lequel, pour une pluralité de tâches à exécuter par ledit réseau de neurones profond (R), ledit calcul d'un niveau de profondeur de découpage est effectué, pour chaque caméra de vidéosurveillance, en fonction de capacités calculatoires dudit au moins un processeur intégré dans ladite caméra de vidéosurveillance, de capacités calculatoires dudit système informatique distant, et d'au moins un critère de performance calculé pour chaque tâche à exécuter,
la capacité calculatoire étant estimée par un temps d'exécution d'une tâche, le calcul d'un niveau de profondeur de découpage étant fonction en outre d'une fréquence de traitement associée à chaque tâche à exécuter.

8. Système selon la revendication 7, dans lequel le système informatique distant (20) comporte pluralité de serveurs distants connectés via un réseau de communications, ladite pluralité de serveurs fournissant une capacité calculatoire extensible.

9. Système selon l'une des revendications 7 ou 8, dans lequel chaque caméra de vidéosurveillance comporte au moins un processeur de traitement graphique GPU.

10. Système selon l'une des revendications 7 à 9, dans lequel ledit réseau de neurones profond (R) est un réseau de neurones convolutif.

11. Programme d'ordinateur comportant des instructions logicielles qui, lorsqu'elles sont exécutées par un système d'analyse automatique de flux vidéo selon l'une des revendications 7 à 10, mettent en oeuvre un procédé d'analyse automatique de flux vidéo selon l'une des revendications 1 à 6.

## Patentansprüche

1. Verfahren zur automatischen Analyse von Videostreams, die von einer Vielzahl von Videoüberwachungskameras aufgenommen werden, wobei die Kameras jeweils mindestens einen integrierten Prozessor haben, der zur Durchführung von Berechnungen geeignet ist, und mit einem Kommunikationsnetz verbunden werden können, wobei das Verfahren Folgendes umfasst:
- einen ersten Analyseverarbeitungsteil (40, 42, 44) des Videostreams, der ein erstes neuronales Unternetz (R₁) implementiert, das von jeder Videoüberwachungskamera (2₁, 2, 2_{N}) an mindestens einem Teil der Bilder durchgeführt wird, die einen von der Kamera aufgenommenen Videostream bilden, der von dem mindestens einen Prozessor (8, 12) implementiert wird, der in jeder Kamera integriert ist. Der erste Teil der Analyseverarbeitung umfasst eine Extraktion von ersten Metadaten (M(S), 45), die charakteristische Deskriptoren der verarbeiteten Bilder umfassen, durch das erste neuronale Unternetz,
- eine Übertragung der ersten Metadaten an mindestens ein entferntes Computersystem (20) mit einer Vielzahl von Rechenprozessoren,
- einen zweiten Teil der Analyseverarbeitung (46, 48, 50, 52) von Videostreams, der ein zweites neuronales Unternetz (R₂) einsetzt, das von dem genannten entfernten Computersystem (20) implementiert wird, umfassend eine Extraktion von zweiten Metadaten (49), die für die verarbeiteten Bilder charakteristisch sind, unter Verwendung der ersten Metadaten, und eine Faktorisierung der zweiten Metadaten. Die Faktorisierung besteht in der Anwendung einer gemeinsamen Verarbeitung von zweiten Metadaten, die für verarbeitete Bilder von mindestens zwei Videokameras erhalten wurden, um mindestens eine mit den Videostreams verbundene Situationsanalyse durchzuführen, und eine Übertragung des Situationsanalyseergebnisses (A;) durch das entfernte Computersystem (20) an ein Kontrollzentrum (30),
wobei das Verfahren außerdem einen vorherigen Schritt der Bestimmung des ersten neuronalen Unternetzes (R₁) und des zweiten neuronalen Unternetzes (R₂) aus einem tiefen neuronalen Netz (R) mit einer Vielzahl von hierarchischen Tiefenstufen (Q) enthält, wobei die Bestimmung die Berechnung eines Niveaus der Zerlegungstiefe (S) umfasst, wobei das erste neuronale Unternetz (R₁) die Tiefenstufen des neuronalen Netzes implementiert, die niedriger als das Niveau der Zerlegungstiefe sind, und das zweite neuronale Unternetz (R₂) die Tiefenstufen des neuronalen Netzes implementiert, die höher als das Niveau der Zerlegungstiefe sind,
wobei für eine Vielzahl von Aufgaben, die durch das tiefe neuronale Netz (R) auszuführen sind, die Berechnung eines Niveaus der Zerlegungstiefe für jede Videoüberwachungskamera durchgeführt wird, und zwar in Abhängigkeit von den Rechenkapazitäten des mindestens einen in die Videoüberwachungskamera eingebauten Prozessors, den Rechenkapazitäten des entfernten Computersystems und mindestens eines Leistungskriteriums, das für jede auszuführende Aufgabe berechnet wird,
wobei die Rechenkapazität durch eine Zeit für die Ausführung einer Aufgabe geschätzt wird, wobei die Berechnung eines Niveaus der Zerlegungstiefe außerdem von einer Verarbeitungsfrequenz abhängt, die mit jeder auszuführenden Aufgabe verbunden ist.

2. Verfahren nach Anspruch 1, wobei das entfernte Computersystem (20) mehrere entfernte Server umfasst, die über ein Kommunikationsnetzwerk verbunden sind, wobei die mehreren Server eine skalierbare Rechenkapazität bereitstellen.

3. Verfahren nach Anspruch 1 oder 2, wobei das mindestens eine Leistungskriterium ausgewählt ist aus: einer durchschnittlichen Genauigkeit , einer Messung der Genauigkeitsrate im Verhältnis zu einer Rückrufrate, einer Messung der nicht kumulativen Verstärkung.

4. Verfahren nach einem der Ansprüche 1 bis 3, wobei der zweite Analyseverarbeitungsteil mindestens eine Situationsanalyse implementiert aus: einer Einbruchserkennung, einer Gesichtserkennung, einer Schätzung der Dichte einer Menschenmenge, einer Ereignis- oder Vorfallserkennung.

5. Verfahren nach einem der Ansprüche 1 bis 4, das außerdem eine Übertragung von mindestens einem Teil der von jeder Videoüberwachungskamera (2₁, 2, 2_{N}) aufgenommenen Videostreams (V) an das Kontrollzentrum (30) umfasst, und wobei die Übertragung des Analyseergebnisses ein Senden einer Warnung (Aⱼ) an das Kontrollzentrum (30) mit einem zugehörigen Zeitstempel (tⱼ) umfasst.

6. Verfahren nach einem der Ansprüche 1 bis 5, wobei das tiefe neuronale Netz (R) ein faltendes neuronales Netz ist.

7. System zur automatischen Analyse (1) von Videostreams, die von einer Vielzahl von Videoüberwachungskameras aufgenommen werden, wobei die Videoüberwachungskameras (2₁, 2, 2_{N}) jeweils mindestens einen integrierten Prozessor (8, 12) aufweisen, der geeignet ist Berechnungen durchzuführen, und eine Verbindungsfähigkeit (10) zu einem Kommunikationsnetz aufweisen und ein entferntes Computersystem (20) und ein Kontrollzentrum (30) umfassen, wobei das System zur automatischen Analyse (1) von Videostreams so beschaffen ist, dass:
- für jede Videoüberwachungskamera (2₁, 2, 2_{N}) der mindestens eine integrierte Prozessor (8, 12) geeignet ist, einen ersten Verarbeitungsteil zur Analyse von Videostreams durchzuführen, der ein erstes neuronales Unternetz (R₁) einsetzt, auf mindestens einem Teil der Bilder, die einen Videostream bilden, der von der Kamera aufgenommen wurde, wobei der erste Analyseverarbeitungsteil eine Extraktion von ersten Metadaten (M(S)) durch das erste neuronale Unternetz (R₁) beinhaltet, die Deskriptoren umfassen, die für die verarbeiteten Bilder charakteristisch sind,
- jede Kamera (2₁, 2, 2_{N}) dazu geeignet ist, die ersten Metadaten (M(S)) an das mindestens eine entfernte Computersystem (20) mit einer Vielzahl von Rechenprozessoren (24₁, 24, 24ᵢ) zu übertragen,
- das entfernte Computersystem (20) so beschaffen ist, dass es einen zweiten Verarbeitungsteil zur Analyse des Videostreams implementiert, der ein zweites neuronales Unternetz (R₂) implementiert, das die ersten Metadaten verwendet und eine Extraktion von zweiten Metadaten, die für die verarbeiteten Bilder charakteristisch sind, und eine Faktorisierung der zweiten Metadaten umfasst. Die Faktorisierung besteht in der Anwendung einer gemeinsamen Verarbeitung von zweiten Metadaten, die für verarbeitete Bilder von mindestens zwei verschiedenen Videokameras erhalten wurden, um mindestens eine Situationsanalyse in Verbindung mit den Videostreams durchzuführen. Das Computersystem (20) ist so ausgelegt, dass es ein Ergebnis (Aⱼ) der Situationsanalyse an das Kontrollzentrum (30) übermittelt,
wobei das System außerdem eine programmierbare Recheneinrichtung umfasst, die so konfiguriert ist, dass sie eine Vorabbestimmung des ersten neuronalen Unternetzes (R₁) und des zweiten neuronalen Unternetzes (R₂) aus einem tiefen neuronalen Netz (R) mit einer Vielzahl von hierarchischen Tiefenstufen (Q) bestimmen, wobei die Bestimmung die Berechnung eines Niveaus der Zerlegungstiefe (S) umfasst, wobei das erste neuronale Unternetzes (R₁) die Tiefenstufen des neuronalen Netzes implementiert, die niedriger sind als das Niveau der Zerlegungstiefe, das zweite neuronale Teilnetz (R₂) implementiert die Tiefenstufen des neuronalen Netzes, die höher als das Niveau der Zerlegungstiefe sind,
wobei für eine Vielzahl von Aufgaben, die durch das tiefe neuronale Netz (R) auszuführen sind, die Berechnung eines Niveaus der Zerlegungstiefe für jede Videoüberwachungskamera durchgeführt wird, und zwar in Abhängigkeit von den Rechenkapazitäten des mindestens einen in die Videoüberwachungskamera eingebauten Prozessors, den Rechenkapazitäten des entfernten Computersystems und mindestens eines Leistungskriteriums, das für jede auszuführende Aufgabe berechnet wird,
wobei die Rechenkapazität durch eine Zeit für die Ausführung einer Aufgabe geschätzt wird, wobei die Berechnung eines Niveaus der Zerlegungstiefe außerdem von einer Verarbeitungsfrequenz abhängt, die mit jeder auszuführenden Aufgabe verbunden ist.

8. System nach Anspruch 7, wobei das entfernte Computersystem (20) mehrere entfernte Server umfasst, die über ein Kommunikationsnetzwerk verbunden sind, wobei die mehreren Server eine skalierbare Rechenkapazität bereitstellen.

9. System nach einem der Ansprüche 7 oder 8, wobei jede Videoüberwachungskamera mindestens einen Grafikverarbeitungsprozessor GPU aufweist.

10. System nach einem der Ansprüche 7 bis 9, wobei das tiefe neuronale Netz (R) ein faltendes neuronales Netz ist.

11. Computerprogramm mit Softwarebefehlen, die, wenn sie von einem System zur automatischen Analyse von Videostreams nach einem der Ansprüche 7 bis 10 ausgeführt werden, ein Verfahren zur automatischen Analyse von Videostreams nach einem der Ansprüche 1 bis 6 implementieren.

## Claims

1. A method of automatically analysing video streams captured by a plurality of video surveillance cameras, said cameras each having at least one integrated processor adapted to perform calculations and a capacity for connection to a communications network, said method comprising :
- a first video stream analysis processing part (40, 42, 44) implementing a first neural sub-network (R1), performed by each video surveillance camera (2₁, 2,2_{N}) on at least some of the images forming a video stream captured by said camera implemented by said at least one integrated processor (8, 12) of each video surveillance camera, said first analysis processing part comprising an extraction of first metadata (M(S), 45), comprising descriptors characteristic of the processed images, by the first neural sub-network,
- transmission of said first metadata to at least one remote computer system (20) comprising a plurality of calculation processors,
- a second video stream analysis processing part (46, 48, 50, 52) implementing a second neural subnetwork (R₂), implemented by said remote computer system (20), comprising an extraction of second metadata (49) characteristic of the processed images, using said first metadata, and a factorisation of the second metadata said factorisation consisting in applying a joint processing of second metadata obtained for processed images from at least two distinct video surveillance cameras, in order to perform at least one situation analysis associated with the video streams, and a transmission of the situation analysis result (Aⱼ) by the remote computer system (20) to a control centre (30),
the method further including a prior step of determining said first sub-network of neurons (R₁) and said second sub-network of neurons (R₂) from from a deep neural network (R) comprising a plurality of hierarchical depth levels (Q), the said determination comprising the calculation of a deciphering depth level (S), the first neural sub-network (R₁) implementing the depth levels of said neural network lower than said slicing depth level, the second sub-network of neurons (R₂) implementing the depth levels of said neural network higher than said slicing depth level,
in which, for a plurality of tasks to be executed by said deep neural network (R), said calculation of a slicing depth level is performed, for each video surveillance camera, as a function of calculation capacities of said at least one processor integrated into said video surveillance camera, of the computing capacities of said remote computer system, and of at least one performance criterion calculated for each task to be executed,
the computing capacity being estimated by a task execution time, the calculation of a slicing depth level also being a function of a processing frequency associated with each task to be executed.

2. A method according to claim 1, wherein the remote computing system (20) comprises a plurality of remote servers connected via a communications network, said plurality of servers providing scalable computing capacity.

3. A method as claimed in claim 1 or 2, wherein said at least one performance criterion is selected from average precision, a measure of precision rate relative to a recall rate, a measure of non-cumulative gain.

4. A method according to one of claims 1 to 3, in which the second analysis processing part implements at least one situation analysis from among: intrusion detection, face recognition, crowd density estimation, event or incident detection.

5. A method according to one of claims 1 to 4, also involving the transmission of at least part of the video (V) streams captured by each video surveillance camera (2₁, 2, 2_{N}) audit control centre (30), and in which the transmission of the analysis result involves an alert dispatch (Aⱼ) Control Centre audit (30) with associated time label (tⱼ).

6. A Method according to one of claims 1 to 5, wherein said deep neural network (R) is a convolutional neural network.

7. System (1) for the automatic analysis of video streams captured by a plurality of video surveillance cameras, comprising the said video surveillance cameras (2₁, 2, 2_{N}) each having at least one integrated processor (8, 12) adapted to perform calculations and a capacity for connection (10) to a communications network, and comprising a remote computer system (20) and a control centre (30), said automatic video flow analysis system (1) being such that:
- for each video surveillance camera (2₁, 2,2_{N}), said at least one integrated processor (8, 12) is adapted to perform a first video stream analysis processing part implementing a first neural sub-network (R₁), on at least part of the images forming a video stream captured by said camera, said first analysis processing part comprising an extraction of first metadata (M(S)), comprising descriptors characteristic of the processed images, by the first neural subnetwork (R₁),
- each camera (2₁, 2,2_{N}) is adapted to transmit said first metadata (M(S)) to said at least one remote computer system (20) comprising a plurality of calculation processors (24₁, 24, 24ᵢ),
- said remote computer system (20) is adapted to implement a second video stream analysis processing part implementing a second neural sub-network (R₂) using said first metadata, comprising an extraction of second metadata characteristic of the processed images and a factorisation of the second metadata neural network (R₂) using said first metadata, comprising an extraction of second metadata characteristic of the processed images and a factorisation of the second metadata said factorisation consisting in applying a joint processing of second metadata obtained for processed images from at least two distinct video surveillance cameras, in order to obtain the second metadata.said computer system (20) being adapted to transmit a situation analysis result (Aⱼ) to the control centre (30),
the system also includes a programmable computing device configured to implement prior determination of the first (R₁) and second (R₂) neural subnet from a deep (R) neural network involving a plurality of levels (Q) of hierarchical depth, said determination involving the calculation of a level of cutting depth (S), the first sub-network of neurons (R₁) implementing the depth levels of the lower neural network audit the depth level of cutting, the second neural subnet (R₂) implementing the depth levels of the upper neural network audit depth of cutting,
in which, for a plurality of tasks to be executed by said deep neural network (R), said calculation of a slicing depth level is performed, for each video surveillance camera, as a function of calculation capacities of said at least one processor integrated into said video surveillance camera, of the computing capacities of said remote computer system, and of at least one performance criterion calculated for each task to be executed,
the computing capacity being estimated by a task execution time, the calculation of a slicing depth level also being a function of a processing frequency associated with each task to be executed.

8. A system of claim 7, wherein the remote computing system (20) comprises a plurality of remote servers connected via a communications network, said plurality of servers providing scalable computing capacity.

9. A system according to one of claims 7 or 8, wherein each video surveillance camera comprises at least one GPU graphics processing unit.

10. A system according to any one of claims 7 to 9, wherein said deep neural network (R) is a convolutional neural network.

11. A computer program comprising software instructions which, when executed by an automatic video stream analysis system according to one of claims 7 to 10, implement an automatic video stream analysis method according to one of claims 1 to 6.
